# EUROPEAN PATENT APPLICATION

(11) **EP 1 657 900 A1**
(43) Date of publication of application: **17.05.2006**
(21) Application number: 05077288.8
(22) Date of filing: 07.10.2005
(51) Int. Cl.: H04M 3/42

(54) **System and method for playing call tones during the establishment of a phone call in a voice over IP communication system**

(71) Applicant: Genexies Mobile, S.L., 28043 Madrid (ES)
(72) Inventor: Gonzalez, Julio Izquierdo, 28043 Madrid (ES)
(74) Representative: Temino Ceniceros, Ignacio

(57) **Abstract**

The present invention relates to a system for playing at least one call tone during the establishment of a phone call in a VolP communication system between a VolP calling device and a VolP called device. More specifically, the invention relates to a system for playing at least one call tone in a VolP communication system comprising a computer system acting as a server that sends a reproduction of the call tones to the VolP calling device and/or the VolP called device to be played by the playing means thereof (streaming) during the establishment of a phone call. The system (10) comprises a computer system (14) comprising means (24) for storing at least one call tone, and means for sending the reproduction of at least one call tone to at least one of said VolP calling device or VolP called device to be played by the playing means thereof, at least one of said VolP calling device or VolP called device comprising means for receiving the reproduction of at least one call tone.

## Description

The present invention relates to a system for playing at least one call tone during the establishment of a phone call in a VolP communication system between a VolP calling device and a VolP called device. More specifically, the invention relates to a system for playing at least one call tone in a VolP communication system comprising a computer system acting as a server that sends a reproduction of the call tones to the VoIP calling device and/or the VolP called device to be played by the playing means thereof (streaming) during the establishment of a phone call.

Further, the invention relates to a method for playing at least one call tone during the establishment of a phone call in a VolP communication system between a VolP calling device and a VolP called device.

### BACKGROUND ART

Nowadays systems for playing call tones during the establishment of a phone call in a Voice over IP communication system are known. A VolP system comprises a VolP calling device, such as a computer, an IP phone or a traditional phone, and a VolP called device, such as a computer, an IP phone or a traditional phone, said VolP calling device and the VolP called device being connected to an IP-based network. In said VolP communication system, when a phone call is being established, the VolP calling device plays a ring back tone to indicate to its user that the phone call is being established, whereas the VolP called device plays a ring tone to indicate to its user that an incoming phone call is being requested.

Said systems for playing call tones during the establishment of a phone call in a VoIP communication system have several drawbacks. Firstly, the call tones (ring back tones and ring tones) must be locally stored in the VolP calling device and the VolP called device. Consequently, said VolP devices require means for storing the call tones. Obviously, said requirement increases the price of the devices because they need storing means or storing means with a large capacity. Further, the number of stored call tones will always be limited to the capacity of said storing means. In summary, said devices have complex configurations.

In another drawback, because the call tones are stored locally, a first call device (e.g. the called device) cannot play a call tone stored in a second call device (e.g. calling device), each call device being only able to play the call tones that stores itself. Further, for example, the second call device cannot send the call tone to the first call device to be played in said first call device.

On the other hand, said systems for playing a call tone cannot be configured by the users. Thus, for example, the user of the called device cannot define the ring back tone to be played in the calling device or the ring tone to be played in the called device according to the user of the calling device.

According to another drawback, if the user wishes to add a call tone in the device, the new call tone must be downloaded to the device involving large waiting times. Moreover, said devices must share part of their resources to play the call tones.

### DISCLOSURE OF THE INVENTION

On this background, it is therefore an object of the present invention to provide a system for playing call tones during the establishment of a phone call in a VolP communication system, which at least partly solves the problems described above associated with the prior art systems.

This object is achieved in accordance with claim 1 by providing a system for playing at least one call tone during the establishment of a phone call in a Voice over IP (VolP) communication system between a VolP calling device and a VolP called device comprising a computer system comprising means for storing at least one call tone, and means for sending the reproduction of at least one call tone to at least one of said VolP calling device or VoIP called device to be played by the playing means thereof, at least one of said VolP calling device or VoIP called device comprising means for receiving the reproduction of at least one call tone.

In this way, a system for playing at least one call tone during the establishment of a phone call between a calling device and a called device in a VolP system is achieved, wherein the call tones are not stored in the devices but in the provided computer system. Thus, the devices must not comprise storing means or storing means with a large capacity to store said call tones. Further, the call tones stored in the computer system can be shared with all users of the system and consequently, for example, the call tones (ring back tones) to be played in a first call device (e.g. the calling device) can be determined by the user of a second call device (e.g. the called device). In summary, the computer system comprised in the system according to the invention allows to configure the call tones to be played in the calling device and/or in the called device according to predetermined parameters such as the user of the calling device and/or the called device, a group of users, or a period of time in which the phone call is being established.

On the other hand, the users do not have to download the desired call tones in his/her device, saving large waiting times. Furthermore, the call tones are not reproduced in the devices but in the computer system. Said reproduction of the call tones in the computer system is sent to the devices to be played, for example, by means of the *streaming* technology.

The term "streaming" relates to a technology that allows receiving immediately, without waiting times, audiovisual information coming from a server. Basically, said technology is used to relieve the download and execution of audiovisual information, since it allows its execution while the information is being downloaded. It is frequently used in communication systems (e.g. the Internet) and it arises from the requirement of accessing types of voluminous information, mainly audiovisual information in the form of audiovisual files that generate large waiting times when using the conventional download of files. Accordingly, in the present invention, the reproduction of the call tones is performed in the computer system in which the physical files of the call tones are also stored. Said computer system sends the reproduction of the call tone to the calling device if the call tone is a ring back tone or to the called device if the call tone is a ring tone.

According to a preferred embodiment of the invention, the means for sending the reproduction of at least one call tone can operate to send a ring tone to the VolP called device to be played by the playing means thereof, said VoIP called device comprising means for receiving the reproduction of the ring tone. At the same time, the means for sending the reproduction of at least one call tone can operate to send a ring back tone to the VoIP calling device to be played by the playing means thereof, said VolP calling device comprising means for receiving the reproduction of the ring back tone.

In another embodiment of the invention, the computer system can comprise a repository of users (e.g. a database) which stores, at least for each user of the system, a user identifier and a reference to at least one call tone selected by the user, wherein said reference can be configured by the means for configuring the selected call tone reference. As has been described above, said configuration means allow configuring the reproduction of the ring tones and the ring back tones associated to a user according to, for example, a time period (depending on the hour of the call), the user of the calling device, a group of users to which the user of the calling device belongs, a date (day in which the phone call is received), or at random (the call tones are randomly reproduced). A user can have available several ring tones and ring back tones, to be played according to his/her desires.

Preferably, the system can comprise means for detecting a transmission of a phone call from the VolP calling device to the VolP called device for the establishment of the phone call. Said detection of the transmission can be sent (by the sending means of the VolP calling device) like an alarm (sign) to the computer system for starting, when the system of the invention does not have a user administration (repository of users), the reproduction of the predetermined ring back tone, or can be used to determine (by the determining means of the calling device) the identifier of the user of the VoIP calling device and the identifier of the user of the VolP called device, said determined user identifiers being sent to the computer system for obtaining the call tone to be played. It is important to highlight that it is also possible to determine only the identifier of the user of the VolP calling device and, for example, to reproduce the ring back tone associated to said user, or to determine only the identifier of the user of the VolP called device and, for example, to reproduce the ring back tone configured in said user to be reproduced in the VoIP calling device when said user receives a phone call.

In all cases, the detecting means can also detect the interruption of the establishment of a phone call and therefore the reproduction of the call tone representing a ring back tone must be stopped. The interruption of the establishment of the phone call can be due to the phone call is accepted or rejected by the user of the VoIP called device, the user of the VolP calling device hangs the phone up, or an expiration of the time for accepting the phone call. Consequently, the system according to the invention can comprises means for stopping the reproduction of the ring back tone when the interruption of the establishment of a phone call is detected by the detecting means.

If the system comprises said repository of user profile (i.e., a user administration), the computer system can comprise means for obtaining from the repository of users the reference of the call tone selected by the user of the VoIP called device for the user of the VolP calling device to be played as a ring back tone in the VolP calling device by the playing means thereof, according to the sent user identifier/s. For example, said means can obtain the call tone selected by the user of the VolP called device for the user of the VolP calling device to be played as a ring back tone in the VoIP calling device by the playing means thereof. Obviously, said obtaining means act according to the identifier/s received, that is, if they only receive the identifier of the user of the calling device, the call tone to be played will be associated to said user. On the other hand, if they only receive the identifier of the user of the called device, the call tone representing a ring back tone to be played will be associated to said user (i.e. the called user establishes the call tone to be played to the calling user). Further, the ring back tone played during the establishment of the phone call can comprise the reproduction of one or more call tones.

In another embodiment of the invention, the system can comprise means for detecting the reception in the VolP called device of said transmission of the phone call. Said detection of the reception can be sent (by the sending means of the called device) like an alarm (sign) to the computer system for starting, when the system of the invention does not have a user administration (repository of users), the reproduction of the predetermined ring tone, or can be used to determine (by the determining means of the called device) the identifier of the user of the VolP calling device and the identifier of the user of the VoIP called device, said determined user identifiers being sent to the computer system for obtaining the call tone to be played in the called device as a ring tone. It this case, it is important to highlight that it is also possible to determine only the identifier of the user of the VolP calling device and, for example, to reproduce the ring tone associated to said user (thus, the user of the VolP called device can know who the user of the VolP calling device is) or to determine only the identifier of the user of the VolP called device and, for example, to reproduce the configured ring tone for said user.

In all cases, said detecting means can also detect the interruption of the establishment of a phone call and therefore the reproduction of the call tone representing a ring tone must be stopped. The interruption of the establishment of the phone call can be due to the phone call is accepted or rejected by the user of the VoIP called device, the user of the VolP calling device hangs the phone up, or an expiration of the time for accepting the phone call. Consequently, the system according to the invention can comprises means for stopping the reproduction of the ring tone when the interruption of the establishment of a phone call is detected by the detecting means.

Accordingly, the computer system can comprise means for obtaining from the repository of users the reference of the call tone selected by the user of the VoIP called device for the user of the VolP calling device to be played as a ring tone in the VolP called device by the playing means thereof, according to the sent user identifier/s. For example, said means can obtain the call tone selected by the user of the VolP called device for the user of the VolP calling device to be played as a ring tone in the VolP called device by the playing means thereof, according to the sent user identifiers. Obviously, said obtaining means act according to the identifier/s received, that is, if they only receive the identifier of the user of the calling device, the call tone representing a ring tone to be played will be associated to said user. On the other hand, if they only receive the identifier of the user of the called device, the call tone representing a ring tone to be played will be associated to said user (i.e. the called user himself establishes the call tone to be played). Further, the ring tone played during the establishment of the phone call can comprise the reproduction of one or more call tones.

According to another aspect, the present invention provides a Voice over IP (VolP) call device for a VolP communication system comprising means for playing at least one call tone during the establishment of a phone call and means for receiving the reproduction of at least one call tone from a computer system to be played by the playing means of said device, the computer system comprising means for storing at least one call tone and means for sending the reproduction of at least one call tone.

Said VolP call device can be a calling device or a called device in a VoIP communication system, said calling device and called device being connected to an IP-based communication network, such as Internet.

According to another aspect, the present invention provides a method for playing at least one call tone during the establishment of a phone call in a Voice over IP communication system between a VolP calling device and at least one VoIP called device, the method comprising the steps of (A) providing a computer system comprising means for storing at least one call tone; (B) sending the reproduction of at least one call tone from the computer system to at least one of said VolP calling device or VoIP called device; (C) receiving said reproduction of at least one call tone in at least one of said VoIP calling device or VolP called device; (D) playing said reproduction of at least one call tone in at least one of said VoIP calling device or VoIP called device.

In a preferred embodiment of the invention, steps (B) to (D) can comprise (B) sending the reproduction of at least one call tone representing a ring back tone from the computer system to said VoIP calling device; (C) receiving said reproduction of the ring back tone in said VolP calling device; (D) playing said reproduction of the ring back tone in said VoIP calling device. At the same time, steps (B) to (D) can comprise (B) sending the reproduction of at least one call tone representing a ring tone from the computer system to said VoIP called device; (C) receiving said reproduction of the ring tone in said VolP called device; (D) playing said reproduction of the ring tone in said VoIP called device.

The method can comprise, before step (B), the step (E) of detecting a transmission of a phone call to the VolP called device in the VoIP calling device. From said detected transmission, the method can comprise, between steps (E) and (B), the step of (F) sending an alarm (sign) about the detection of the transmission from the VolP calling device to the computer system for causing that step (B) begins.

Alternatively, the method can comprise, between steps (E) and (B), the steps of (H) determining the identifier of the user of the VolP calling device and the identifier of the user of the VolP called device from the detected transmission of the phone call; (I) sending said user identifiers from the VolP calling device to the computer system; (J) obtaining from the repository of users the reference of the call tone representing a ring back tone selected by the user of the VolP called device for the user of the VoIP calling device according to the sent user identifiers. These steps are only possible if the step exists of providing a repository of users, which stores, for each user, a user identifier and a reference to at least one call tone selected by the user (step G).

Preferably, the method can comprise, before step (B), the step (K) of detecting the reception of the transmission of the phone call in the VolP called device. Next, the method can comprise, between steps (K) and (B), the step of (L) sending an alarm (sign) of said reception of the transmission from the VolP called device to the computer system for causing that step (B) begins.

Alternatively, if step (G) exists, the method can comprise, between steps (K) and (B), the steps of (M) determining the identifier of the user of the VolP calling device and the identifier of the user of the VoIP called device from the detected reception of the transmission; (N) sending said user identifiers from the VolP called device to the computer system; (O) obtaining from the repository of users the reference to the call tone representing a ring tone selected by the user of the VolP called device for the user of the VolP calling device according to the user identifiers. Obviously, it is possible to determine only the identifier of the user of the VoIP calling device or the identifier of the user of the VolP called device.

According to another aspect of the invention, there is provided a method for playing at least one call tone in a Voice over IP call device during the establishment of a phone call in a VolP communication system, the method comprising the steps of (C) receiving the reproduction of at least one call tone in the VolP call device from a computer system, which comprises means for storing at least one call tone; (D) playing said reproduction of at least one call tone in the VolP call device.

According to yet another aspect, the present invention provides a computer program comprising program instructions for causing a computer to perform the method for playing a call tone in a VolP call device during the establishment of a phone call with another VolP call device in a VolP communication.

Step (D) can be performed directly by a module of the computer program or the reproduction of the call tone can be forwarded to an external computer program for playing multimedia files running, for example, on the call device. In both cases, the computer program according to the invention comprises a module responsible of playing the reproduction of at least one call tone, said module playing said reproduction in a directly or indirectly way.

Said computer program can be, for example, embodied on a record medium, stored in a computer memory, embodied in a read-only memory, or carried on an electrical carrier signal.

### DEFINITIONS

Prior to a discussion of the detailed embodiments of the invention is provided a definition of specific terms related to the main aspects of the invention.

The term *"Voice over IP*" (also called VoIP, IP telephony, or Internet telephony) denotes herein a routing of voice signals as packets over an IP-based network, such as Internet. Basically, it is a communication system that transforms the standard voice signal in packets of compressed data that are transported in packets through lines of data instead of the traditional phone lines.
The term *"call tone"* denotes herein a ring back tone or a ring tone.
The term *"ring tone"* (RT) denotes herein the sounds that the receiver of a call listens through the speaker of the device indicating that an incoming call is being received. The sounds are listened until the call is accepted or rejected.
The term *"ring back tone"* (RBT) denotes herein the different mechanical tones or sounds that the originator of the call listens through the speaker of the device while the receiver accepts or rejects the call.
The term *"streaming"* denotes herein the technology that allows audio and video files to be played without previously download the entire file in the client device (continuous download in real time).
The term *"calling device"* denotes the device that originates the call. Said device can be, for example, a computer, a mobile phone or a VoIP phone.
The term *"called device"* denotes the device that receives a call from the calling device. Said device can be, for example, a computer, a mobile phone or a VolP phone.
The term "VoAP" denotes a computer program comprised in the calling device or in the called device that allows the communication of VolP between the calling device and the called device.
The term *·"GxAP"* denotes a computer program that interacts with the VoAP and allows the operating of the system according to the invention.
The term *"user profile"* denotes all data including the contents and call tones selected by the user and how the data must be played.

Embodiments of the present invention are described below, by way of example only.

### BRIEF DESCRIPTION OF THE DRAWINGS

In the following detailed portion of the present description, the invention will be explained in more detail with reference to the exemplary embodiment shown in the drawing, in which:

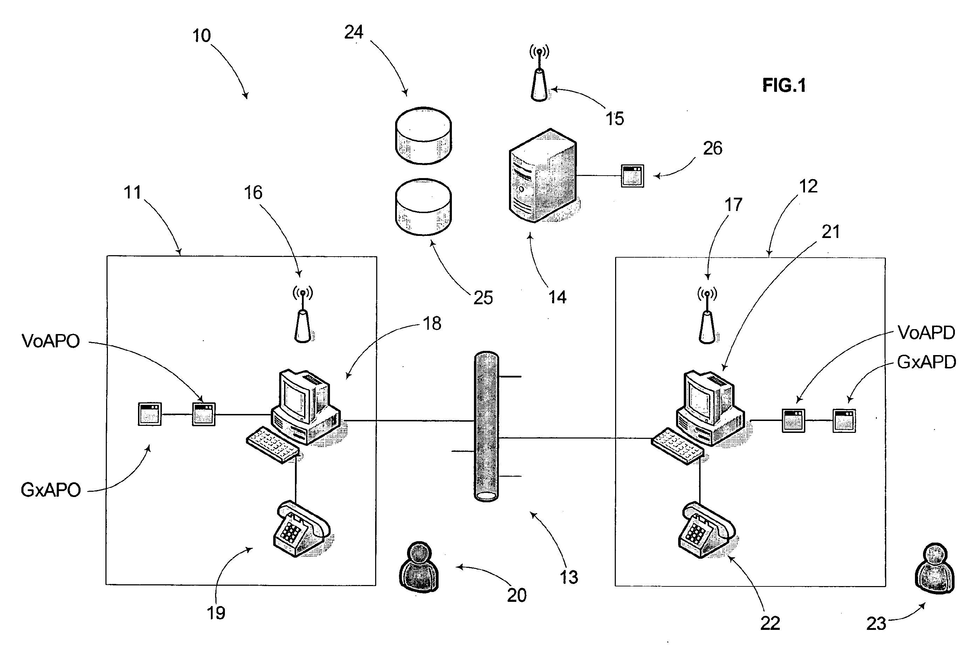

Fig.1 is a block diagram illustrating a preferred embodiment of the system for playing at least one call tone during the establishment of a phone call in a Voice over IP communication system between a VolP calling device and a VolP called device according to the invention.

### DETAILED DESCRIPTION

In the following detailed description, embodiments of the invention will be described.

Fig.1 shows a block diagram of the system for playing at least one call tone during the establishment of a phone call in a Voice over IP (VoIP) communication system between a VoIP calling device and a VolP called device through an IP-based communication network according to the invention.

A communication in a VoIP system can be performed:
- Phone to computer: the call is created in the phone and finished in the computer.
- Computer to phone: the call is created in the computer and finished in the phone.
- Computer to computer: the call is created in a computer and finished in another computer.
- Phone to phone: the call is created in a phone and finished in another phone.

For emitting or receiving a phone call in a VolP communication system, a phone or a computer must be connected to an IP-based communication network, such as Internet. For emitting a phone call from a computer to another VolP device, the computer must be connected to said network and must have installed a computer program VoAP for converting the voice signal in packets. For transmitting voice from a computer to another computer, both computers must be connected to the network and have installed the computer program VoAP. The called computer must have the program VoAP for converting the received packets in voice. The communication between VolP devices can be direct, from the calling device to the called device directly, or indirect, from the VoIP calling device to the VolP called device passing through a server that processes the data.

As can be seen in Fig.1, the system 10 according to the invention comprises a VolP calling device 11, a VolP called device 12, an IP-based communication network 13 to which the VolP calling device and the VolP called device are connected, and a computer 14 acting as a server connected to the VolP calling device and to the VoIP called device by means of a wireless network generated by an access point (not shown) which connects a wireless network adapter 15 of the server 14, a wireless network adapter 16 of the calling device 11 and a wireless network adapter 17 of the called device 12. It is important to highlight that the communication network 13 (IP-based network) between the VolP calling device 11 and the VoIP called device 12 can be a different network (as in Fig.1) from the communication network (wireless network) between the VolP calling device and the server 14 and between the VoIP called device and the server. The communication network between the VolP calling device and the server can even be a different network from the communication network between the VoIP called device and the server.

The VolP calling device 11 comprises a first computer 18 connected to the IP-based network 13 (e.g. Internet) by a router (not shown), a phone 19 (an speaker and a microphone) connected to the first computer (e.g. through the sound card) to perform a voice conversation through the network with the called device 12, the wireless network adapter 16 for connecting the computer 18 with the server 14, a first computer program VoAPO for managing the voice conversation between the VolP calling device and the VoIP called device, and a computer program GxAPO for playing at least one call tone representing a ring back tone in the VoIP calling device while a phone call is being established with the VoIP called device. A user 20 takes charge of said calling device 11. Obviously, the computer 18 could be replaced, for example, by an IP phone or a traditional phone connected to the network by means of an adapter.

The computer program VoAPO is running in the first computer 18 and it is appropriate to code the voice signals generated by the phone 19 of the VolP calling device in packets to be sent to the VolP called device through Internet, or to decode the voice packets received through Internet from the VolP called device in voice signals. Said computer program VoAPO interacts with the computer program VoAPD of the VolP called device to perform a voice conversation, as will be described below.

The computer program GxAPO for playing a call tone representing a ring back tone comprises a module for detecting a transmission of a phone call from the VoIP calling device 11 to the VoIP called device 12; a module for determining the identifier of the user 20 of the VolP calling device and the identifier of the user 23 of the VoIP called device from the detection of the transmission; a module for sending said user identifiers to the server 14 through the wireless network by means of the adapter 16 of the VoIP calling device, the adapter 15 of the server and the access point; a module for receiving the reproduction of at least one call tone representing the ring back tone from the server according to the user identifiers sent to the server; and a module for playing said reproduction of the ring back tone (e.g. the module uses the sound card of the first computer 18, which sends the ring back tone to the speaker of the telephone used by the user 20).

In another embodiment of the invention, the computer program GxAPO for playing a ring back tone can comprise a module for detecting a transmission of a phone call from the VoIP calling device 11 to the VoIP called device 12; a module for sending an alarm (sign) about the detection of the transmission to the server 14 through the wireless network by means of the adapter 16 of the VoIP calling device, the adapter 15 of the server and the access point, for starting the reproduction of at least one predetermined call tone as a ring back tone; a module for receiving the reproduction of the call tone representing the ring back tone from the server; and a module for playing said reproduction of the ring back tone (e.g. the module uses the sound card of the first computer 18, which sends the ring back tone to the speaker of the telephone used by the user 20). This configuration of the computer program GxAPO is appropriate when a user administration (database of user profiles) is not provided to the system according to the invention.

The following concepts must be clarified:
- The module for playing the reproduction of the ring back tone can play directly or indirectly said reproduction, that is, the module can play the reproduction of the ring back tone directly but it should comprise a player of multimedia files or can play the reproduction of the ring back tone indirectly if it sends the reproduction of the ring back tone to a computer program for playing multimedia files running, for example, in the first computer 18. Obviously, if the calling device is different from a computer and does not have, for example, a computer program for playing multimedia (or audio) files, the computer program GxAPO should comprises a player of multimedia files or similar.
- The module for detecting the transmission of a phone call can also detect the interruption of the establishment of the phone call due to the user of the called device accepts or rejects the phone call, the user of the calling device hangs the phone up, or the time for accepting the call expires. Consequently, the computer program GxAPO according to the invention must comprise a module for stopping the reproduction of the ring back tone that is being played in the calling device if the detecting module detects the interruption of the establishment of the phone call.
- The module for determining the identifier of the user 20 of the VolP calling device and the identifier of the user 23 of the VolP called device from the detection of the transmission can only determine the identifier of the user of the calling device or the identifier of the user of the called device. If it only determine the identifier of the user of the calling device, the ring back tone to be played is obtained from the profile of said user (the calling user selects the ring back tone to be played when a phone call is being established by him), whereas if it only determines the identifier of the user of the called device, the ring back tone to be played is obtained from the profile of said user (the called user selects the ring back tone to be played in the calling device).

The computer program VoAPO and the computer program GxAPO can interact directly between them, by means of an API or including the computer program GxAPO in the computer program VoAPO, for example, as a module.
- By means of an API provided by the own company or third creator of the VoAPO or pre-existent in the VoAPO, being also possible that this API has been created or developed by a third party unrelated to the company that initially creates the VoAPO.
- By means of an interpretation by the GxAPO of actions performed by the own VoAPO in the moments in that the calls are emitted or received using the development commands of the operating system on which the first computer 18 works, said computer having installed the VoAPO and the commands generated from several operating systems, among which Windows and Linux are supported.
- The GxAPO is included directly in the VoAPO itself and is a part thereof and receives the commands from the VoAPO itself directly without the need for interpreting, reading or receiving them indirectly through the API or the interaction from the exterior.

The interaction between the computer program VoAPO and the computer program GxAPO are required, for example, for detecting the transmission of the phone call or the interruption of the establishment of the phone call. An event occurred in the computer program VoAPO is detected by the computer program GxAPO to generate an action. Thus, for example, when an event of interruption of the establishment of the phone call in the computer program VoAPO is detected by the computer program GxAPO, said computer program GxAPO stops the reproduction of the ring back tone played in the calling device acting on the module for playing the reproduction of the ring back tone or on the computer program for playing multimedia files running, for example, in the first computer 18.

The VolP called device 12 comprises a second computer 21 connected to the IP-based network 13 (e.g. Internet) by a router (not shown), a phone 22 (an speaker and a microphone) connected to the second computer (e.g. through the sound card) to perform the voice conversation through the network with the VoIP calling device 11, the wireless network adapter 17 for connecting the second computer 21 with the server 14, a first computer program VoAPD for managing the voice conversation between the VolP calling device and the VolP called device, and a computer program GxAPD for playing a call tone representing a ring tone in the VolP called device. A user 23 takes charge of said VolP called device 12.

The computer program VoAPD is installed in the second computer 21 and it is appropriate to code the voice signals generated by the phone 22 in packets to be sent to the VolP calling device through Internet, or to decode the voice packets received through Internet from the VolP calling device in voice signals. Said computer program VoAPD interacts with the computer program VoAPO of the VolP calling device, as it will be described below, to perform a voice conversation.

The computer program GxAPD for playing a ring tone in the VoIP called device comprise a module for detecting the reception in the VolP called device of the transmission of the phone call from the VoIP calling device 11; a module for determining the identifier of the user 20 of the VoIP calling device and the identifier of the user 23 of the VoIP called device from the detection of the reception; a module for sending said user identifiers to the server 14 through the wireless network by means of the adapter 17 of the VolP called device, the adapter 15 of the server (the wireless network) and the access point; a module for receiving the reproduction of a call tone representing the ring tone from the server according to the user identifiers sent to the server; and a module for playing said reproduction of the ring tone (e.g. the module uses the sound card of the second computer 21, which sends the ring tone to the speaker of the telephone 22 used by the user 23). It is possible that said playing means send the reproduction of the ring tone to an audio player running in the second computer 21.

In another embodiment of the invention, the computer program GxAPD for playing a ring tone can comprise a module for detecting the reception in the VoIP called device of the transmission of the phone call from the VoIP calling device 11; a module for sending an alarm (sign) of the detection of the reception to the server 14 through the wireless network by means of the adapter 17 of the VolP called device, the adapter 15 of the server and the access point for starting the reproduction of a predetermined call tone as a ring tone to be played in the VoIP called device 12; a module for receiving from the server the reproduction of a call tone representing the ring tone; and a module for playing said reproduction of the ring tone (e.g. the module uses the sound card of the second computer 21, which sends the ring tone to the speaker of the telephone 22 used by the user 23). This configuration of the computer program GxAPD is appropriate when a user administration (database of user profiles) is not provided in the system according to the invention.

The following concepts must be clarified:
- The module for playing the reproduction of the ring tone can play directly or indirectly said reproduction, that is, the module can play the reproduction of the ring tone directly but it should comprise a player of multimedia files or can play the reproduction of the ring tone indirectly if it sends the reproduction of the ring tone to a computer program for playing multimedia files running, for example, in the second computer 21. Obviously, if the called device is different from a computer and does not have, for example, a computer program for playing multimedia (or audio) files, the computer program GxAPD should comprises a player of multimedia files or similar.
- The module for detecting the reception of the transmission of a phone call can also detect the interruption of the establishment of the phone call due to the user of the called device accepts or rejects the phone call, the user of the calling device hangs the phone up, or the time for accepting the call expires. Consequently, the computer program GxAPD according to the invention must comprise a module for stopping the reproduction of the ring tone that is being played in the called device if the detecting module detects the interruption of the establishment of the phone call.
- The module for determining the identifier of the user of the VolP calling device and the identifier of the user of the VolP called device from the detection of the reception can only determine the identifier of the user of the calling device or the identifier of the user of the called device. If it only determine the identifier of the user of the calling device, the ring tone to be played is obtained from the profile of said user (the calling user selects the ring tone to be played when a phone call is being established by him), whereas if it only determines the identifier of the user of the called device, the ring tone to be played is obtained from the profile of said user (the called user selects the ring tone to be played).

The computer program VoAPD and the computer program GxAPD can interact directly between them, by means of an API or including the computer program GxAPD in the computer program VoAPD, for example, as a module.

The interaction between the computer program VoAPD and the computer program GxAPD are required, for example, for detecting the reception of the transmission of the phone call or the interruption of the establishment of the phone call. An event occurred in the computer program VoAPD is detected by the computer program GxAPD to generate an action.

The computer program GxAPO is the same that de computer program GxAPD. Thus, the same device can act as a VolP calling device or a VolP called device without any change. In the same manner, the computer program VoAPO is the same that the computer program VoAPD.

The server 14 comprises the wireless network adapter 15 for connecting the server with the VolP calling device 11 and the VoIP called device 12 through the access point, a database 24 of call tones, a database 25 of user profiles, said databases being stored in the hard disk (not shown) of the server, and a computer program 26 for managing the reproduction of the call tones. Obviously, said databases can be stored in others computers which must be accessed by the computer system 14.

The database of call tones stores, at least for each user 20;23, a user identifier and a reference to at least one call tone stored in the database 24 of call tones. For example, the user 23 of the VolP called device 12 can have configured a call tone as a ring back tone to be played in the VolP calling device 11 for a determined user 20 of the VolP calling device, and another call tone as a ring tone to be played in the VolP called device for the user 20 of the VolP calling device, that is, the profile of the user 23 of the VolP called device indicates the ring back tone and the ring tone that must be played while the phone call is being established. However, the system can have several combinations. For example, the ring back tone and the ring tone to be played can be indicated by the profile of the user 20 of the VolP calling device 11, or the ring back tone can be indicated by the profile of the user 20 of the VolP calling device and the ring tone can be indicated by the profile of the user 23 of the VolP called device, etc. According to the used combination, the modules must be adapted.

For performing said configuration of the references of call tones, the system according to the invention comprises a computer program such as a web interface (e.g. an html page) that can be external to the computer programs GxAPO and GxAPD, internal to the programs GxAPO and GxAPD, external to the programs VoAPO and VoAPD, and internal to the programs VoAPO and VoAPD. Said interface can be served by an http server hosted, for example, in the server 14. The modification of the configuration of the call tones can be performed during the communication between the programs GxAPO or GxAPD and the server, through the wireless network.

Said computer program for managing the user profiles can be accessed normally from the called device even though it could be accessed from other locations. Said computer program allows management operations such as creation, edition, elimination and combination of said management operations, for managing at least one of the elements of the user profiles stored in the database 25 of user profiles (e.g. the call tones associated to a user identifier).

Said configuration of the call tones for each user can be performed, for example, for period of time (depending on the hour of the phone call), calling user, group of calling users, date (day in which the phone call is received), or at random (the call tones are reproduced randomly).

Each user can have configured several ring back tones and ring tones, which configuration can be modified (e.g. a call tone can be removed from the user profile).

Normally, the user of the called device will determine the ring back tones and the ring tones to be played according to optional parameters, such as the user of the calling device.

The computer program 26 of the server 14 comprises a module for receiving user identifiers from the VoIP calling device through the wireless network; a module for obtaining the call tone representing the ring back tone to be played in the VoIP calling device according to the received user identifiers; a module for reproducing the obtained call tone; a module for sending the reproduction of the call tone to the VolP calling device 11; a module for receiving the user identifiers from the VoIP called device 12; a module for obtaining the call tone representing a ring tone to be played in the VolP called device according to the received user identifiers; a module for reproducing said call tone representing a ring tone; and a module for sending said reproduction of the ring tone to the VolP called device to be played.

If a user administration is not provided (a user database), the computer program 26 of the server comprises the following modules: a module for receiving an alarm (transmission detected) from the VoIP calling device through the wireless network for starting the reproduction of a predetermined call tone representing a ring back tone; a module for obtaining the call tone representing the ring back tone to be played in the VolP calling device; a module for reproducing the obtained call tone; a module for sending the reproduction of the call tone to the VolP calling device 11; a module for receiving an alarm (reception detected) from the VolP called device 12 for starting the reproduction of a predetermined call tone representing a ring tone; a module for obtaining the call tone representing a ring tone to be played in the VolP called device; a module for reproducing said call tone representing a ring tone; and a module for sending said reproduction of the ring tone to the VoIP called device to be played.

The technology used for playing the reproduction of the call tones in the call devices 1,12 is streaming-based. The term "streaming" relates to a technology that allows receiving immediately, without waiting times, audiovisual information coming from a server. Basically, said technology is used to relieve the download and execution of audiovisual information, since it allows its execution while the information is being downloaded. It is frequently used in communication systems (e.g. the Internet) and it arises from the requirement of accessing types of voluminous information, mainly audiovisual information in the form of audiovisual files that generate large waiting times when using the conventional download of files. Accordingly, in the present invention, the reproduction of the call tones is performed in the computer system in which the physical files of the call tones are also stored. Said computer system sends the reproduction of the call tone to the calling device if the call tone is a ring back tone or to the called device if the call tone is a ring tone.

The method for playing at least one call tone during the establishment of a phone call in a VolP communication system between a VoIP calling device and a VoIP called device through an IP-based communication network comprises the following steps.

Starting from an idle state, in the step A, the server 14 is provided. After the program VoAPO of the VolP calling device 11 begins a transmission for establishing a phone call with the VolP called device 12 through the IP-based network 13, the program GxAPO that interacts with the program VoAPO detects (step E) said event of transmission. In a step H, the program GxAPO determines the identifier of the user 20 of the VoIP calling device and the identifier of the user 23 of the VolP called device from said event, and sends (step I) said user identifiers to the server 14. Next, the computer program 26 of the server obtains (step J) from the database of user profiles the reference to the ring back tone selected by the user of the VolP called device for the user of the VolP calling device according to the sent user identifiers, and it reproduces said ring back tone that has been obtained from the database of call tones with the previously obtained reference. In the step (B), the reproduction of the ring back tone is sent by the program 26 to the VolP calling device 11, which receives it (step C) and plays it (step D).

In the step (K), the computer program GxAPD of the VolP called device 12 detects the reception by the computer program VoIPD of the transmission in the VolP called device. Next, in the step (M) the program GxAPD determines the identifier of the user 20 of the VolP calling device and the identifier of the user 23 of the VolP called device, and sends (step N) said user identifiers to the server 14. Next, the computer program 26 of the server obtains (step 0) from the database of user profiles the reference to the ring tone selected by the user of the VolP called device for the user of the VolP calling device according to the sent user identifiers, and reproduces said ring tone that it has been obtained from the database of call tones from the reference previously obtained. In the step (B), the reproduction of the ring tone is sent to the VolP called device 12, which receives (step C) it and plays (step D) it.

Obviously, before the step H, a database of user profiles (a user administration) must be provided (step G). If said database is not provided, the method according to the invention comprises the following steps: starting from an idle state, in the step A, the server 14 is provided. After the program VoAPO of the VolP calling device 11 begins a transmission for establishing a phone call with the VolP called device 12 through the IP-based network 13, the program GxAPO that interacts with the program VoAPO detects (step E) said transmission. In a step F, the program GxAPO sends an alarm to the server for starting the reproduction of a predetermined call tone representing a ring back tone. In the step (B), the reproduction of the ring back tone is sent to the VoIP calling device 11, which receives (step C) it and plays (step D) it.

In the step (K), the computer program GxAPD of the VolP called device 12 detects the event in the computer program VolPD of reception of the transmission in said device. Next, in the step (L), the program GxAPD sends an alarm (reception detected) to the server 14 for starting the reproduction of a predetermined call tone representing a ring tone. The computer program 26 sends (step B) the reproduction of the ring tone to the VolP called device 12, which receives (step C) it and plays (step D) it.

In summary, the method according to the invention comprises the following steps:
- The calling device 11 generates a phone call;
- The detecting module of the computer program GxAPO detects (step E) the transmission of the phone call to the called device 12 from an event occurred in the computer program VoAPO (the computer programs GxAPO and VoAPO interacts directly between them, by means of an APl or including the computer program GxAPO in the computer program VoAPO, for example, as a module);
- The determining module of the computer program GxAPO determines (step H) the identifier of the user of the calling device and the identifier of the user of the called device from the event of the transmission of the phone call in the computer program VolPO;
- The sending module of the computer program GxAPO sends (step I) said identifiers to the computer system 14;
- The receiving module of the computer program 26 of the server receives said identifiers and obtains (step J) from the database of user profiles the ring back tone selected by the user of the called device for the user of the calling device;
- The reproducing module of the computer program 26 of the server reproduces said obtained ring back tone and sends (step B) it to the calling device;
- The receiving module of the computer program GxAPO receives (step C) the reproduction of the ring back tone and plays (step D) it in the calling device (streaming). Said reproduction can be played directly by a playing module of the computer program GxAPO or can be forwarded by said playing module to a computer program for playing multimedia files (e.g. it can run in the first computer 18 of the calling device).

At the same time, the method comprises the following steps for the called device:
- The detecting module of the computer program GxAPD detects (step K) the reception of the transmission of the phone call in the called device 12 from an event occurred in the computer program VoAPD (the computer programs GxAPD and VoAPD interacts directly between them, by means of an API or including the computer program GxAPD in the computer program VoAPD, for example, as a module);
- The determining module of the computer program GxAPD determines (step M) the identifier of the user of the calling device and the identifier of the user of the called device from the event of the transmission of the phone call;
- The sending module of the computer program GxAPD sends (step N) said identifiers to the computer system 14;
- The receiving module of the computer program 26 of the server receives said identifiers and obtains (step O) from the database of user profiles the ring tone selected by the user of the called device for the user of the calling device;
- The reproducing module of the computer program 26 of the server reproduces said obtained ring tone and sends (step B) it to the called device;
- The receiving module of the computer program GxAPD receives (step C) the reproduction of the ring tone and plays (step D) it in the called device. Said reproduction can be played directly by a playing module of the computer program GxAPD or can be forwarded by said playing module to a computer program for playing multimedia files (e.g. it can run in the second computer 21 of the called device).

In all cases, the call tones (ring tone and ring back tone) are played until the phone call is accepted or rejected by the user of the VolP called device, until the user of the VolP calling device hangs the phone up, or until the expiration of the time for accepting the phone call. An interruption of the establishment of the phone call generates an event in the computer programs VoAPO and VoAPD, which is detected by the computer programs GxAPO and GXAPD, respectively. From said detection, said computer programs GxAPO and GxAPD stop the reproduction of the played call tones (ring back tone and ring tone) in the call devices (calling ad called devices).

Although the present invention has been described in detail for purpose of illustration, it is understood that such detail is solely for that purpose, and variations can be made therein by those skilled in the art without departing from the scope of the invention.

Thus, while the preferred embodiments of the method and the system have been described in reference to the environment in which they were developed, they are merely illustrative of the principles of the inventions. Other embodiments and configurations may be devised without departing from the scope of the appended claims.

For example, it is possible to use call tones in the form of audiovisual files. Thus, during the establishment of a phone call, the calling device and the called device could play video, image, text and/or audio files, or combinations of them, as call tones.

Further, although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When the program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. A system for playing at least one call tone during the establishment of a phone call in a Voice over IP (VoIP) communication system between a VoIP calling device (11) and at least one VolP called device (12), the VolP calling device comprising means for playing a call tone representing a ring back tone and the VolP called device comprising means for playing a call tone representing a ring tone, **characterised in that** the system (10) comprises a computer system (14) comprising means (24) for storing at least one call tone, and means for sending the reproduction of at least one call tone to at least one of said VolP calling device or VolP called device to be played by the playing means thereof, at least one of said VoIP calling device or VolP called device comprising means for receiving the reproduction of at least one call tone.

2. A system according to claim 1, wherein the means for sending the reproduction of at least one call tone operate to send a ring tone to the VoIP called device (12) to be played by the playing means thereof, said VolP called device comprising means for receiving the reproduction of the ring tone.

3. A system according to any of claims 1 or 2, wherein the means for sending the reproduction of at least one call tone operate to send a ring back tone to the VoIP calling device (11) to be played by the playing means thereof, said VoIP calling device comprising means for receiving the reproduction of the ring back tone.

4. A system according to any of claims 1 to 3, wherein the computer system (14) comprises a repository (25) of users which stores, for each user of the system, a user identifier and a reference to at least one call tone selected by the user (20;23).

5. A system according to claim 4, further comprising means for configuring the selected call tone reference.

6. A system according to any of claims 1 to 5, further comprising means for detecting a transmission of a phone call from the VolP calling device (11) to the VolP called device (12) for the establishment of the phone call.

7. A system according to any of claims 1 to 6, further comprising means for sending data from the VoIP calling device (11) to the computer system (14).

8. A system according to claim 7, wherein said sent data comprise an alarm about said detection of the transmission.

9. A system according to claim 7, further comprising means for determining the identifier of the user of the VolP calling device (11) and the identifier of the user of the VolP called device (12) from said detected transmission, said sent data comprising said determined user identifiers.

10. A system according to claim 9, wherein the computer system (14) comprises means for obtaining from the repository of users the reference of the call tone selected by the user (23) of the VolP called device (12) for the user (20) of the VolP calling device (11) to be played as a ring back tone in the VolP calling device by the playing means thereof, according to the sent user identifiers.

11. A system according to any of claims 6 to 10, further comprising means for detecting the reception in the VolP called device of said transmission of the phone call.

12. A system according to any of claims 1 to 11, further comprising means for sending data from the VoIP called device (12) to the computer system (14).

13. A system according to claim 12, wherein said sent data comprise an alarm about said detection of the reception.

14. A system according to claim 12, further comprising means for determining the identifier of the user (23) of the VolP called device (12) and the identifier of the user (20) of the VoIP calling device (11) from said detected reception, said sent data comprising said determined user identifiers.

15. A system according to claim 14, wherein the computer system (14) comprises means for obtaining from the repository (25) of users the reference of the call tone selected by the user (23) of the VolP called device (12) for the user (20) of the VolP calling device (11) to be played as a ring tone in the VolP called device by the playing means thereof, according to the sent user identifiers.

16. A system according to any of claims 1 to 15, wherein the computer system (14) comprises means for reproducing at least one call tone.

17. A voice over IP (VoIP) call device for a VolP communication system comprising means for playing at least one call tone during the establishment of a phone call, **characterised in that** the VolP call device (11;12) comprises means for receiving the reproduction of at least one call tone from a computer system (14) to be played by the playing means of said device, the computer system comprising means for storing at least one call tone and means for sending the reproduction of at least one call tone.

18. A method for playing at least one call tone during the establishment of a phone call in a Voice over IP (VoIP) communication system between a VolP calling device (11) and at least one VolP called device (12), the method comprising the steps of:
A. Providing a computer system (14) comprising means (24) for storing at least one call tone;
B. Sending the reproduction of at least one call tone from the computer system to at least one of said VolP calling device or VolP called device;
C. Receiving said reproduction of at least one call tone in at least one of said VoIP calling device or VolP called device;
D. Playing said reproduction of at least one call tone in at least one of said VolP calling device or VolP called device.

19. A method according to claim 18, wherein steps (B) to (D) comprise:
B. Sending the reproduction of at least one call tone representing a ring back tone from the computer system to said VoIP calling device;
C. Receiving said reproduction of the ring back tone in said VolP calling device;
D. Playing said reproduction of the ring back tone in said VoIP calling device.

20. A method according to any of claims 18 or 19, wherein steps (B) and (D) comprise:
B. Sending the reproduction of at least one call tone representing a ring tone from the computer system to said VoIP called device;
C. Receiving said reproduction of the ring tone in said VoIP called device;
D. Playing said reproduction of the ring tone in said VolP called device.

21. A method according to any of claims 18 to 20, further comprising, before step (B), the step of:
E. Detecting a transmission of one phone call from the VoIP calling device to the VolP called device.

22. A method according to claim 21, further comprising, between steps (E) and (B), the step of:
F. Sending an alarm about the detection of the transmission from the VoIP calling device (11) to the computer system (14).

23. A method according to any of claims 18 to 21, further comprising the step of:
G. Providing a repository (25) of users, which stores, for each user, a user identifier and a reference to at least one call tone selected by said user.

24. A method according to claim 23, further comprising, between steps (E) and (B), the steps of:
H. Determining the identifier of the user of the VolP calling device (11) and the identifier of the user of the VolP called device (12) from the detected transmission of the phone call;
I. Sending said user identifiers from the VoIP calling device to the computer system (14);
J. Obtaining from the repository (25) of users the reference of the call tone representing a ring back tone selected by the user (23) of the VoIP called device for the user (20) of the VolP calling device according to the sent user identifiers.

25. A method according to any of claims 18 to 24, further comprising, before step (B), the step of:
K. Detecting the reception of the transmission of the phone call in the VolP called device (12).

26. A method according to claim 25, further comprising, between steps (K) and (B), the step of:
L. Sending an alarm of said reception of the transmission from the VolP called device (12) to the computer system (14).

27. A method according to claim 25, further comprising, between steps (K) and (B), the steps of:
M. Determining the identifier of the user (20) of the VoIP calling device (11) and the identifier of the user (23) of the VoIP called device (12) from the detected reception of the transmission;
N. Sending said user identifiers from the VoIP called device to the computer system (14);
O. Obtaining from the repository (25) of users the reference to the call tone representing a ring tone selected by the user of the VolP called device for the user of the VolP calling device according to the user identifiers.

28. A method for playing at least one call tone in a Voice over IP (VoIP) call device during the establishment of a phone call in a VolP communication system, the method comprising the steps of:
C. Receiving the reproduction of at least one call tone in the VolP call device from a computer system, which comprises means for storing at least one call tone;
D. Playing said reproduction of at least one call tone in the VolP call device.

29. A computer program comprising program instructions for causing a computer to perform the method of claim 28.

30. A computer program according to claim 29, embodied on a record medium.

31. A computer program according to claim 29, stored in a computer memory.

32. A computer program according to claim 29, embodied in a read-only memory.

33. A computer program according to claim 29, carried on an electrical carrier signal.
